# EUROPÄISCHE PATENTSCHRIFT

(11) **EP 1 904 326 B1**
(45) Veröffentlichungstag und Bekanntmachung des Hinweises auf die Patenterteilung: **23.06.2010**
(21) Anmeldenummer: 06761778.7
(22) Anmeldetag: 07.07.2006
(51) Int. Cl.: B60J 7/02, B60J 7/043

(54) **FAHRZEUGDACH MIT EINEM BEWEGBAREN DACHTEIL**
VEHICLE ROOF WITH A MOVABLE ROOF SECTION
TOIT DE VEHICULE A PARTIE DE TOIT MOBILE

(30) Priorität: 09.07.2005 DE 102005032437
(43) Veröffentlichungstag der Anmeldung: 02.04.2008
(73) Patentinhaber: Webasto AG, 82131 Stockdorf (DE)
(72) Erfinder: HAGER, Christian, 83052 Bruckmühl (DE); BERTSCH, Robert, 81243 München (DE)
(86) Internationale Anmeldenummer: PCT/DE2006/001176
(87) Internationale Veröffentlichungsnummer: WO 2007/006276

(56) Entgegenhaltungen:
- DE-C1- 3 607 724
- DE-C2- 19 514 585
- DE-U1- 9 116 421
- DE-U1- 29 924 601
- GB-A- 2 144 174

## Beschreibung

Die Erfindung betrifft ein Fahrzeugdach mit einem bewegbaren Dachteil, das mittels einer Ausstell- und/oder Verschiebemechanik in eine Lüfterposition ausstellbar und/oder oberhalb oder unterhalb des Fahrzeugdachs bzw. eines zumindest zeitweise festen Dachteils zum wenigstens teilweisen Freigeben einer Dachöffnung im Fahrzeugdach verschiebbar ist gemäß dem Oberbegriff des Patentanspruchs 1.

Aus der DE 195 14 585 C2 ist ein derartiges Fahrzeugdach bekannt. Bei diesem ist die Kulisse vollständig aus Kunststoff hergestellt und weist, um eine entsprechende mechanische Festigkeit und Stabilität zu erzielen, entsprechend hohe Wanddicken auf.

Aus der DE 91 16 421 U1 ist ein weiteres Fahrzeugdach bekannt, bei dem eine Kulisse aus Blech besteht. Ein in der Kulisse ausgebildeter Führungsschlitz ist gemäß einer Variante an seinem Rand umlaufend mit einem Kunststoff umspritzt. Trotz dieser etwas breiteren Kunststoff-Anspritzung ist sowohl die Tragfähigkeit als auch die Breite der Führungsbahn für den im Führungsschlitz gleitenden Stift begrenzt.

Aus der DE 299 24 601 U1 ist ein weiteres Fahrzeugdach bekannt, bei dem die Kulisse von zwei aneinander liegenden Blechteilen gebildet wird, die an ihrer Unterkante jeweils nach außen abgewinkelt sind. Die nach außen abgewinkelten Stege sind vollständig mit Kunststoff umspritzt. Ungünstig bei dieser Variante ist der Aufwand für das Abkanten der Blechkulissen und die dabei auftretenden relativ hohen Fertigungstoleranzen.

Der Erfindung liegt die Aufgabe zugrunde, ein Fahrzeugdach mit einer einfach herstellbaren Kulisse zu versehen, die bei geringeren Abmessungen geringe Formtoleranzen und eine hohe Festigkeit aufweist.

Diese Aufgabe wird erfindungsgemäß durch die Merkmale des Patentanspruchs 1 gelöst. Vorteilhafte Ausgestaltungen der Erfindung sind in den Unteransprüchen angegeben.

Die Erfindung sieht im Kern vor, dass die Kulisse aus Metall im unteren vertikalen Bereich mehrere voneinander beabstandete, zur Verankerung des Kunststoffs der Führungsstege dienende Durchbrüche aufweist.

Dabei sind die Durchbrüche gemäß einer ersten Variante unmittelbar vom Kunststoffmaterial durchsetzt, das auch den Führungssteg bildet. Durch die Umklammerung der Durchbrüche verbindet sich das Kunststoffmaterial fest mit dem vertikalen Steg der Kulisse.

Gemäß einer zweiten Variante weist die Kulisse im Bereich der Durchbrüche nach außen in Richtung der Führungsstege vorspringende Verprägungen auf, die vom Kunststoffmaterial der Führungsstege umschlossen werden. Durch die Verprägungen wird die Oberfläche des Verbindungsbereichs zwischen metallischer Kulisse und dem Kunststoffmaterial gegenüber den reinen Durchbrüchen der ersten Variante vergrößert, wodurch die Tragfähigkeit der Kulisse noch weiter erhöht wird.

Gemäß einer dritten Variante dienen die Durchbrüche zur Verankerung von Tragbolzen, die ihrerseits das Kunststoffmaterial der Führungsstege mit tragen. Die Tragbolzen können aus Metall bestehen, sind jedoch bevorzugt aus einem Kunststoff gefertigt, der eine höherer Festigkeit aufweist als das Kunststoffmaterial, das die Gleitbahnen der Führungsstege bildet. Zu diesem Zweck kann der Kunststoff der Tragbolzen, mit Fasern wie Glasfasern oder Kohlefasern armiert sein.

Die Tragbolzen können die Durchbrüche durchdringen und somit auf beiden Seiten der Kulisse als Träger des Kunststoffmaterials der Führungsstege dienen.

Bevorzugt sind zwei spiegelbildlich gleiche Metallprofile mit ihrer glatten Rückwand so zu einer gemeinsamen Kulisse zusammengefügt, dass sich zu beiden Seiten je ein Führungssteg erstreckt. Die Führungsstege werden in diesem Fall bevorzugt gemeinsam an den unteren Kanten der Kulisse und im Bereich der darüber angeordneten Durchbrüche durch Spritzen mit Kunststoffmaterial erzeugt.

Gemäß einer vorteilhaften Ausführungsform ist im oberen Bereich der Kulisse ein Flansch angeordnet, der zur Befestigung der Kulisse am bewegbaren Dachteil dient. Der Flansch wird gemäß einer ersten Alternative von nach außen abgewinkelte Schenkeln der Metallprofile gebildet. Alternativ dazu kann der Flansch auch durch einen Zwischenraum zwischen den beiden Metallprofilen gebildet werden, in den ein Träger des bewegbaren Dachteils eingreift.

Alternativ zu einer Befestigung am Deckel kann eine erfindungsgemäße Kulisse aber auch an einem verschiebbaren Schlitten angeordnet sein und dann mit einem am bewegbaren Dachteil angeordneten Gleitelement oder Schwenkhebel im Eingriff stehen.

Die Erfindung eignet sich für ein Hebedach, ein Schiebehebedach, ein Spoilerdach und auch für ein außen geführtes Schiebedach (ASD).

Nachfolgend wird das Fahrzeugdach anhand von drei Ausführungsbeispielen unter Bezugnahme auf die Zeichnung näher erläutert. Es zeigt:
- Fig. 1: eine schematische Draufsicht auf ein Fahrzeugdach mit einem bewegbaren Dachteil in teilweise geöffneter Position;
- Fig. 2: eine schematische Seitenansicht einer an dem Dachteil angeordneten Kulisse und eines verschiebbaren Schlittens;
- Fig. 3: einen Querschnitt durch eine erste erfindungsgemäße Ausführungsform einer Deckelkulisse;
- Fig. 4: eine schematische perspektivische Seitenansicht auf eine zweite erfindungsgemäße Ausführungsform einer Deckelkulisse;
- Fig. 5: eine schematische perspektivische Darstellungeiner dritten erfindungsgemäßen Ausführungsform einer Deckelkulisse; und
- Fig. 6: einen Querschnitt durch die dritte Ausführungsform.

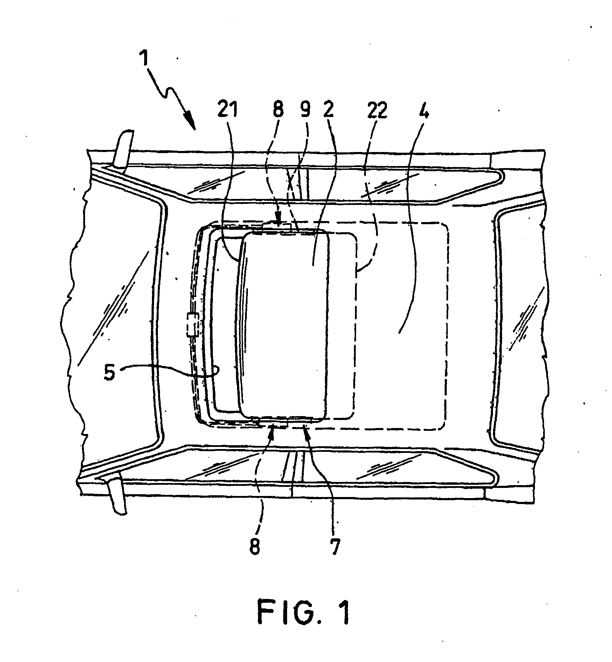

Das in Fig. 1 gezeigte Fahrzeugdach 1 weist ein bewegbares Dachteil 2 auf, das an seitlich einer Dachöffnung 5 angeordneten Führungsschienen 7 um eine nahe seiner Vorderkante 21 angeordnete Schwenkachse schwenkbar und dabei mit seiner Hinterkante 22 in eine Lüftungsstellung ausstellbar ist. Im gezeigten Beispiel ist das Dachteil 2 als Schiebehebedach ausgebildet und zusätzlich mit seiner Hinterkante 21 unter ein festes Dachteil 4 absenkbar und zur Freigabe der Dachöffnung 5 nach hinten verschiebbar.

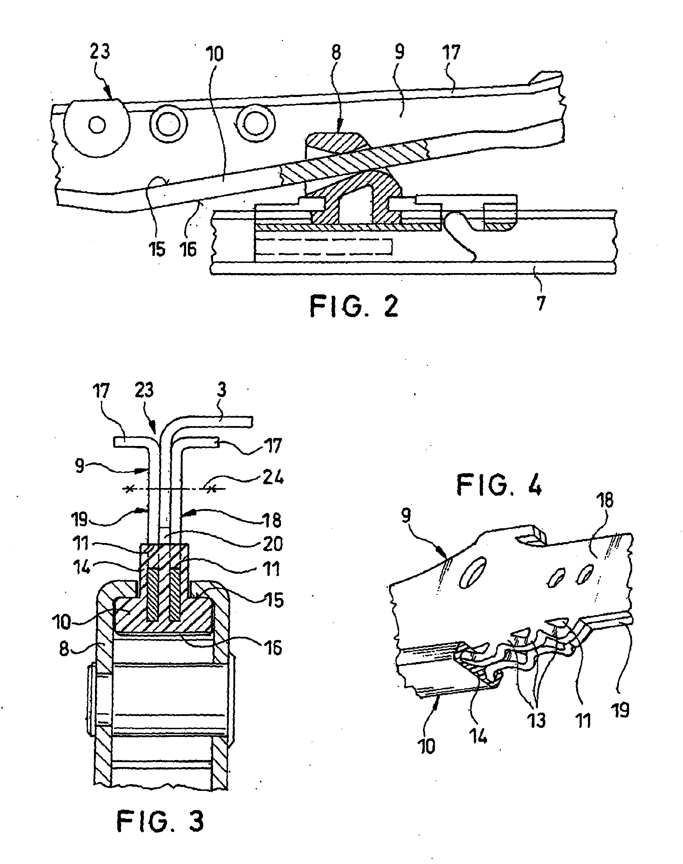

Das bewegbaren Dachteil 2 ist im Bereich seiner beiden seitlichen Kanten mit jeweils einer im wesentlichen vertikalen Kulisse 9 versehen. Diese Kulisse 9 weist nahe ihrem unteren Rand bevorzugt zwei symmetrische einander gegenüberliegende Führungsstege 10 auf, die jeweils an ihrer oberen Seite eine Gleitbahn 15 und an ihrer unteren Seite eine Gleitbahn 16 bilden. Die Gleitbahnen 15 bzw. 16 dienen zur Führung eines in der Führungsschiene 7 längs verschiebbar geführten Schlittens 8. Der Schlitten 8 ist mittels eines nicht dargestellten Antriebskabels durch einen nicht dargestellten elektrischen Antrieb antreibbar. Der Schlitten 8 umgreift zu diesem Zweck, wie in Fig. 3 dargestellt, die beiden nach oben weisenden Gleitbahnen 15 und die unteren Gleitbahnen 16 an den beiden einander gegenüberliegenden Führungsstegen 10. Da die Führungsstege 10, wie in Fig. 2 dargestellt, insgesamt über die Länge der Kulisse 9 eine Kurvenbahn bilden, wird das Dachteil 2 beim Verschieben des Schlittens 8 aus der in Fig. 2 dargestellten Position nach vom mit seiner Hinterkante 22 angehoben und beim Verschieben des Schlittens 8 aus der in Fig. 2 dargestellten Position nach hinten mit seiner Hinterkante 22 abgesenkt.

Wie in einer ersten Ausführungsform gemäß Fig. 3 gezeigt, wird die Kulisse 9 bevorzugt von zwei spiegelbildlich gleichen Metallprofilen 18 bzw. 19 gebildet, die jeweils an ihrer oberen Kante einen nach innen bzw. nach außen abgewinkelten horizontalen Quersteg 17 aufweisen. Die Querstege 17 können unmittelbar als Flansch 23 zur Befestigung des bewegbaren Dachteils 2 dienen. Im gezeigten Beispiel gemäß Fig. 3 sind die Metallprofile 18 bzw. 19 mit ihrer glatten Rückwand voneinander beabstandet und bilden einen Zwischenraum 20, der zur Aufnahme eines vertikalen Steges eines Trägers 3 des Dachteils 2 und somit als Flansch 23 dient. Der Träger 3 ist an den Metallprofilen 18 bzw. 19 mittels einer Befestigung 24, beispielsweise durch Schrauben verbunden.

Im unteren Bereich weisen die Metallprofile 18 bzw. 19 mehrere deckungsgleich zueinander, in Längsrichtung hintereinander angeordnete Durchbrüche 11 auf. Die Durchbrüche 11 sind als Bohrungen oder als beispielsweise durch Stanzen hergestellte Langlöcher ausgebildet. Die Durchbrüche 11 werden mit den darunter angeordneten unteren Teilen der Metallprofile 18 bzw. 19 komplett mit einem Kunststoffmaterial 14 umspritzt, das auch gleichzeitig die beiden seitlich vorspringenden Führungsstege 10 mit den Gleitbahnen 15 bzw. 16 bildet. Dadurch, dass das Kunststoffmaterial die Durchbrüche 11 durchdringt, entsteht eine sehr tragfähige Verbindung zwischen den Metallprofilen 18 bzw. 19 und dem Kunststoffmaterial 14, so dass insgesamt eine sehr tragfähige Kulisse 9 aus der Verbindung von Metall und Kunststoff gebildet wird.

Im zweiten Ausführungsbeispiel gemäß Fig. 4 sind ebenfalls zwei mit ihren Rückseiten glattflächig aneinander liegende Metallprofilen 18 bzw. 19 zu einer Kulisse 9 verbunden. Zur innigeren Verbindung mit dem die Führungsstege 10 bildenden Kunststoffmaterial 14 sind die Metallprofile 18 bzw. 19, wie bereits aus dem ersten Ausführungsbeispiel gemäß Fig. 3 bekannt, nahe ihrer Unterkante mit mehreren, in Längsrichtung hintereinander angeordneten Durchbrüche 11 versehen, wobei jedoch zusätzlich das unterhalb der Durchbrüche 11 befindliche Material der Metallprofile 18 und 19 durch im gezeigten Beispiel wellenförmige, jeweils in gleichmäßigen Abständen nach außen vorspringende Verprägungen 13 verformt ist. Die Verprägungen 13 können mit einem geeigneten Stanz-Biege-Werkzeug in einem Arbeitsgang gleichzeitig mit den Durchbrüchen 11 an den Metallprofilen 18 und 19 erzeugt werden. Die Verprägungen 13 dienen zur Vergrößerung der Oberfläche, an der sich das Kunststoffmaterial 14 mit dem Metall der Metallprofile 18 und 19 verbindet, so dass die Festigkeit einer derartigen Kulisse 9 noch vergrößert wird.

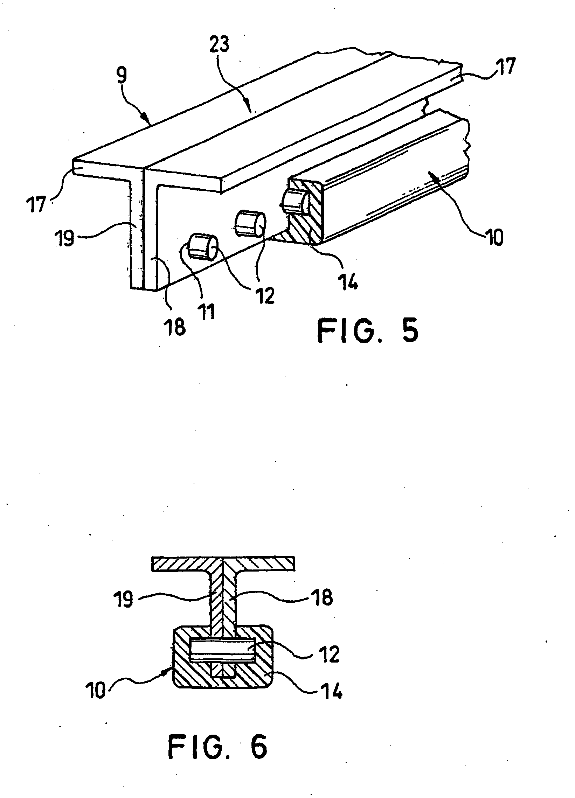

Eine dritte Variante eine erfindungsgemäßen Kulisse ist in den Figuren 5 und 6 dargestellt. Die beiden die Kulisse 9 bildenden Metallprofile 18 und 19 mit ihren am oberen Ende ausgebildeten horizontalen Querstegen 17 sind mit ihren glatten Rückseiten aneinander gefügt. Die Durchbrüche 11 sind als zylindrische Bohrungen ausgeführt. In den zylindrischen Bohrungen der Durchbrüche 11 werden Tragbolzen 12 verankert, die aus Metall, bevorzugt aber aus einem Kunststoffmaterial bestehen, das eine höhere Festigkeit aufweist, als das Kunststoffmaterial 14, das die Führungsstege 10 mit den Gleitbahnen 15 und 18 bildet. Die Tragbolzen 12 erstrecken sich bevorzugt durch die deckungsgleichen Durchbrüche 11 in beiden vertikalen Schenkeln der Metallprofile 18 und 19 hindurch, so dass sie auf beiden Seiten gleichmäßig vorstehen. Die Tragbolzen 12 können zusätzlich beispielsweise durch Erwärmung oder durch Kleben mit dem Metall der Metallprofile 18 und 19 verbunden sein. Über den gesamten unteren Bereich der Metallprofile 18 und 19, in dem sich die Tragbolzen 12 befinden, wird anschließend in einer Form, die der Kontur der Gleitstege 10 entspricht, Kunststoffmaterial 14 gespritzt oder gegossen, so dass dieses Kunststoffmaterial 14 zwei horizontal gegenüberliegende Gleitstege 10 bildet. Das Kunststoffmaterial 14 umgreift dabei vollständig die Tragbolzen 12, den unteren Teil der Seitenflächen der Metallprofile 18 und 19 sowie deren Unterseite. Es bildet an der Oberseite der beiden Gleitstege 10 die Gleitbahnen 15 und an der gesamten Unterseite die Gleitbahnen 16 für den Schlitten 8. Das Verfahren zum Umspritzen oder Umgießen des unteren Teils der Kulissen 9 unter Einbeziehung der Durchbrüche 11 ist bei allen drei Varianten gleich. Die Durchbrüche 11 dienen somit auch in dritten Ausführungsbeispiel - hier allerdings mittelbar durch zumindestens teilweises Umschließen der Tragbolzen 12- zur Verankerung des Kunststoffs 14 der Führungsstege 10.

Bei allen drei Ausführungsformen wird eine kostengünstige, einfach herstellbare Kulisse 9 mit hoher Festigkeit und guten Gleiteigenschaften geschaffen.

### Bezugszeichenliste

- 1: Fahrzeugdach
- 2: (bewegbares) Dachteil
- 3: Träger (an )2
- 4: (festes) Dachteil
- 5: Dachöffnung
- 7: Führungsschiene
- 8: Schlitten
- 9: Kulisse
- 10: Führungssteg
- 11: Durchbruch
- 12: Tragbolzen
- 13: Verprägung
- 14: Kunststoffmaterial
- 15: Gleitbahn (an 10)
- 16: Gleitbahn (an 10)
- 17: Quersteg (an 9, 18, 19)
- 18: (erstes) Metallprofil
- 19: (zweites) Metallprofil
- 20: Zwischenraum
- 21: Vorderkante (von 2)
- 22: Hinterkante (von 2)
- 23: Flansch

## Patentansprüche

1. Fahrzeugdach (1) mit einem bewegbaren Dachteil (2), das mittels einer Ausstell- und/oder Verschiebemechanik in eine Lüfterposition ausstellbar und/oder oberhalb oder unterhalb des Fahrzeugdachs (1) bzw. eines zumindest zeitweise festen Dachteils (4) zum wenigstens teilweisen Freigeben einer Dachöffnung (5) im Fahrzeugdach (1) verschiebbar ist, wobei die Ausstell- und/oder Verschiebemechanik wenigstens eine vertikale Kulisse (9) umfaßt, die wenigstens einen senkrecht zur Kulisse (9) angeordneten Führungssteg (10) mit Gleitbahnen (15, 16) aufweist, die von einem Gleitelement eines längs einer Führungsschiene (7) verfahrbaren Schlittens (8) wenigstens teilweise umgriffen werden, wobei die Kulisse (9) aus Metall und der Führungssteg (10) zumindest teilweise aus Kunststoffmaterial (14) besteht, **dadurch gekennzeichnet, dass** die Kulisse (9) mehrere voneinander beabstandete, zur Verankerung des Kunststoffmaterials (14) der Führungsstege (10) dienende Durchbrüche (11) aufweist.

2. Fahrzeugdach nach Anspruch 1, **dadurch gekennzeichnet, dass** die Durchbrüche (11) einen Teil des Führungssteges (10) bildende Tragbolzen (12) aufnehmen, die vom Kunststoffmaterial (14) umgeben sind und von denen das Kunststoffmaterial (14) zusätzlich gehalten ist.

3. Fahrzeugdach nach Anspruch 1 oder 2, **dadurch gekennzeichnet, dass** die Tragbolzen (12) aus einem Kunststoff höherer Festigkeit bestehen als das Kunststoffmaterial (14), das die Gleitbahnen (15, 16) der Führungsstege (10) bildet.

4. Fahrzeugdach nach Anspruch 3, **dadurch gekennzeichnet, dass** die Durchbrüche (11) vom Kunststoffmaterial (14) des Führungssteges (10) durchdrungen sind.

5. Fahrzeugdach nach einem der vorhergehenden Ansprüche, **dadurch gekennzeichnet, dass** die Kulisse (9) im Bereich der Durchbrüche (11) seitlich in Richtung der Führungsstege (10) vorspringende Verprägungen (13) aufweist.

6. Fahrzeugdach nach einem der vorhergehenden Ansprüche, **dadurch gekennzeichnet, dass** die Kulisse (9) von zwei spiegelbildlich gleichartigen Metallprofilen (18, 19) gebildet wird.

7. Fahrzeugdach nach Anspruch 6, **dadurch gekennzeichnet, dass** die Metallprofile (18, 19) an ihrer Oberseite einen Flansch (23) zur Befestigung am Dachteil (2) bilden.

8. Fahrzeugdach nach Anspruch 7, **dadurch gekennzeichnet, dass** der Flansch (23) von einem horizontalen Quersteg (17) an der Oberkante der Metallprofile (18, 19) gebildet wird.

9. Fahrzeugdach nach einem der Ansprüche 6 bis 8, **dadurch gekennzeichnet, dass** die Metallprofile (18, 19) zumindest nahe ihrer Oberkante einen vertikalen Zwischenraum (20) für einen Träger (3) des Dachteils (2) bilden.

10. Fahrzeugdach nach einem der vorhergehenden Ansprüche, **dadurch gekennzeichnet, dass** die Führungsstege (10) mit den Gleitbahnen (15, 16) als Umspritzungen aus Kunststoffmaterial (14) ausgebildet sind.

11. Fahrzeugdach nach einem der vorhergehenden Ansprüche, **dadurch gekennzeichnet, dass** die Durchbrüche (11) als Langloch gebildet sind.

12. Fahrzeugdach nach einem der Ansprüche 1 bis 10, **dadurch gekennzeichnet, dass** die Durchbrüche (11) als Bohrung gebildet sind.

## Claims

1. Vehicle roof (1) with a movable roof section (2) which can be deployed into a ventilation position by means of a deployment and/or displacement mechanism and/or can be displaced above or below the vehicle roof (1) or an at least temporarily fixed roof section (4) for at least partially releasing a roof opening (5) in the vehicle roof (1), the deployment and/or displacement mechanism comprising at least one vertical slotted guide (9) which has at least one guide web (10) which is arranged perpendicular to the slotted guide (9) and has slide tracks (15, 16) which are at least partially embraced by a sliding element of a slide (8) which is movable along a guide rail (7), the slotted guide (9) being composed of metal and the guide web (10) being at least partially composed of plastics material (14), **characterized in that** the slotted guide (9) has a plurality of apertures (11) which are spaced apart from one another and serve to secure the plastics material (14) of the guide webs (10).

2. Vehicle roof according to Claim 1, **characterized in that** the apertures (11) receive supporting bolts (12) which form part of the guide web (10), are surrounded by the plastics material (14) and by which the plastics material (14) is additionally held.

3. Vehicle roof according to Claim 1 or 2, **characterized in that** the supporting bolts (12) are composed of higher strength plastic than the plastics material (14) which forms the slide tracks (15, 16) of the guide webs (10).

4. Vehicle roof according to Claim 3, **characterized in that** the apertures (11) are penetrated by the plastics material (14) of the guide web (10).

5. Vehicle roof according to one of the preceding claims, **characterized in that** the slotted guide (9) has, in the region of the apertures (11), embossments (13) which project laterally in the direction of the guide webs (10).

6. Vehicle roof according to one of the preceding claims, **characterized in that** the slotted guide (9) is formed by two mirror-inverted metal profiles (18, 19) of the same type.

7. Vehicle roof according to Claim 6, **characterized in that**, on their upper side, the metal profiles (18, 19) form a flange (23) for fastening to the roof section (2).

8. Vehicle roof according to Claim 7, **characterized in that** the flange (23) on the upper edge of the metal profiles (18, 19) is formed by a horizontal transverse web (17).

9. Vehicle roof according to one of Claims 6 to 8, **characterized in that**, at least in the vicinity of their upper edge, the metal profiles (18, 19) form a vertical intermediate space (20) for a support (3) of the roof section (2).

10. Vehicle roof according to one of the preceding claims, **characterized in that** the guide webs (10) are formed together with the slide tracks (15, 16) from plastics material (14) as encapsulations by injection molding.

11. Vehicle roof according to one of the preceding claims, **characterized in that** the apertures (11) are formed as a slot.

12. Vehicle roof according to one of Claims 1 to 10, **characterized in that** the apertures (11) are formed as a hole.

## Revendications

1. Toit de véhicule (1) avec une partie de toit mobile (2), qui peut être ouverte vers l'extérieur au moyen d'un mécanisme d'ouverture et/ou de déplacement dans une position de ventilation et/ou qui peut être déplacée au-dessus ou en dessous du toit du véhicule (1) ou d'une partie de toit (4) au moins temporairement fixe en vue de libérer au moins en partie une ouverture de toit (5) dans le toit du véhicule (1), le mécanisme d'ouverture et/ou de déplacement comprenant au moins une coulisse verticale (9), qui présente au moins une nervure de guidage (10) disposée perpendiculairement à la coulisse (9), avec des pistes de glissement (15, 16) qui sont saisies au moins en partie par un élément de glissement d'un chariot (8) déplaçable le long d'un rail de guidage (7), la coulisse (9) se composant de métal et la nervure de guidage (10) se composant au moins en partie d'un matériau en plastique (14),
**caractérisé en ce que** la coulisse (9) présente plusieurs orifices (11) espacés les uns des autres et servant à ancrer le matériau en plastique (14) des nervures de guidage (10).

2. Toit de véhicule selon la revendication 1,
**caractérisé en ce que** les orifices (11) reçoivent des boulons porteurs (12) formant une partie de la nervure de guidage (10), qui sont enveloppés par le matériau en plastique (14) et qui maintiennent en outre le matériau en plastique (14).

3. Toit de véhicule selon la revendication 1 ou 2, **caractérisé en ce que** les boulons porteurs (12) se composent d'un plastique de plus grande résistance que le matériau en plastique (14) qui forme les pistes de glissement (15, 16) des nervures de guidage (10).

4. Toit de véhicule selon la revendication 3,
**caractérisé en ce que** les orifices (11) sont traversés par le matériau en plastique (14) de la nervure de guidage (10).

5. Toit de véhicule selon l'une quelconque des revendications précédentes, **caractérisé en ce que** la coulisse (9) présente dans la région des orifices (11) des empreintes (13) saillant latéralement dans la direction des nervures de guidage (10).

6. Toit de véhicule selon l'une quelconque des revendications précédentes, **caractérisé en ce que** la coulisse (9) est formée par deux profilés métalliques (18, 19) de même type et à symétrie spéculaire.

7. Toit de véhicule selon la revendication 6,
**caractérisé en ce que** les profilés métalliques (18, 19) forment sur leur côté supérieur une bride (23) pour leur fixation à la partie de toit (2).

8. Toit de véhicule selon la revendication 7,
**caractérisé en ce que** la bride (23) est formée par une nervure transversale horizontale (17) sur l'arête supérieure des profilés métalliques (18, 19).

9. Toit de véhicule selon l'une quelconque des revendications 6 à 8, **caractérisé en ce que** les profilés métalliques (18, 19) forment au moins à proximité de leur arête supérieure un espace intermédiaire vertical (20) pour un support (3) de la partie de toit (2).

10. Toit de véhicule selon l'une quelconque des revendications précédentes, **caractérisé en ce que** les nervures de guidage (10) sont réalisées avec les pistes de glissement (15, 16) sous forme de surmoulages en matériau plastique (14).

11. Toit de véhicule selon l'une quelconque des revendications précédentes, **caractérisé en ce que** les orifices (11) sont réalisés sous forme de trous oblongs.

12. Toit de véhicule selon l'une quelconque des revendications 1 à 10, **caractérisé en ce que** les orifices (11) sont réalisés sous forme d'alésages.
